# EUROPÄISCHE PATENTANMELDUNG

(11) **EP 1 541 412 A1**
(43) Veröffentlichungstag der Anmeldung: **15.06.2005**
(21) Anmeldenummer: 03028313.9
(22) Anmeldetag: 09.12.2003
(51) Int. Cl.: B60P 1/44

(54) **Ladebordwandsystem**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(57) **Zusammenfassung**

Es wird ein Ladebordwandsystem (10) zum Befestigen an Fahrzeugen (11) insbesondere Lastkraftfahrzeugen, vorgeschlagen, umfassend zwei im wesentlichen parallelogrammförmige, im wesentlichen parallel voneinander beabstandete Tragwerke (13, 14), eine im wesentlichen plattenförmige Ladebordwand (15) zum Anheben und Absenken einer Last und einem Hubaktuator (16) der mit dem als Hubtragwerk ausgebildeten ersten Tragwerk (13) zusammenwirkt, zum Heben (32) und Senken (33) der Ladebordwand (15), wobei die beiden Tragwerke (13, 14) teilweise am Fahrzeug über jeweilige im wesentlichen parallel voneinander beabstandete Gelenkelemente (28, 29) befestigt sind, die um eine im wesentlichen horizontale, parallel zur Fläche der Ladebordwand (10) verlaufende Achse (280, 290) derart drehbar sind, daß die Ladebordwand (15) in ihrer auf einem Untergrund (30) abgesenkten Stellung mit ihrem freien Kantenbereich (150) auf dem Untergrund (30) abkippend aufliegt. Dabei sind die beabstandeten Gelenkelemente (28, 29) über ein Verbindungselement (31) miteinander verbunden.

## Beschreibung

Die Erfindung betrifft ein Ladebordwandsystem zum Befestigen an Fahrzeugen, insbesondere Lastkraftfahrzeugen, umfassend zwei im wesentlichen parallelogrammförmige, im wesentlichen parallel voneinander beabstandete Tragwerke, eine im wesentlichen plattenförmige Ladebordwand zum Anheben und Absenken einer Last und einen Hubaktuator, der mit dem als Hubtragwerk ausgebildeten ersten Tragwerk zusammenwirkt, zum Heben und Senken der Ladebordwand, wobei die beiden Tragwerke teilweise am Fahrzeug über jeweilige im wesentlichen parallel voneinander beabstandete Gelenkelemente befestigt sind, die um eine im wesentlichen horizontale, parallel zur Fläche der Ladebordwand verlaufende Achse derart drehbar befestigt sind, daß die Ladebordwand in ihrer auf einem Untergrund abgesenkten Stellung mit ihrem freien Kantenbereich auf dem Untergrund abkippend aufliegt.

Ein Ladebordwandsystem dieser Art ist bekannt (Bär Hydfalt Cargolift), mit dem ein automatisches Abkippen der Ladebordwand möglich ist, wenn diese auf dem Untergrund im abgesenkten Zustand aufliegt.

Ladebordwandsysteme dieser Art sind seit langem bekannt und sind bspw. in der EP-A-0 808 747 bezüglich ihres allgemeinen Aufbaues beschrieben. Diese Ladebordwandsysteme finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahnebene, auf dem das Lastkraftfahrzeug steht, absenken zu können, so daß die Last dann anderweitig zum Bestimmungsort verbracht werden kann. Das Gleiche gilt für den Beladungsvorgang eines Kraftfahrzeugs, d.h. die Last wird auf die sich auf der Fahrbahnebene befindende Ladebordwand aufgebracht, die Ladebordwand wird auf die Höhe der Ladeplattform des Lastkraftwagens angehoben und nachfolgend auf die Ladeplattform verbracht.

Bei einer grundsätzlichen, im Stand der Technik, bekannten Ausgestaltung des Ladebordwandsystems wird, nachdem der Entlade- bzw. Beladevorgang beendet ist, die Ladebordwand aus der Horizontalen, in der sie sich zum Beund Entladen befand, in die Vertikale verschwenkt, so daß die Ladebordwand als rückwärtiger Abschluß der Ladefläche bzw. eines kofferartig ausgestalteten Laderaums dienen kann.

Bei einer anderen im Stand der Technik bekannten Ausgestaltung des Ladebordwandsystems wird die Ladebordwand, nachdem der Entlade- bzw. Beladevorgang beendet ist, zusammengeklappt, man spricht in diesem Falle von sogen. "Faltladebordwänden", und auf geeignete Weise unterhalb der Ladefläche des Lastkraftfahrzeugs, an dessen hinteren Ende positioniert. Diese Positionierbarkeit am vorbeschriebenen 0rte kann durch eine geeignet ausgebildete Konstruktion eines derartigen Ladebordwandsystems ermöglicht werden oder auch durch ein gesondertes Schienen- bzw. Verschiebesystem geschehen, über das das Ladebordwandsystem an dem fahrzeugeigenen Chassisrahmen befestigt ist.

Bei dem im Stand der Technik bekannten Ladebordwandsystem (Bär Hydfalt Cargolift), aber auch bei vielen anderen im Stand der Technik bekannten Ladebordwandsystemen sind zwei parallel voneinander beabstandete Tragwerke vorhanden, an denen jeweils ein gesonderter Hubaktuator zum Heben und Absenken der Ladebordwand angreift.

Diese bekannten Konstruktionen dieser Art sind sehr nachteilig, da sie aufgrund ihrer zwei Hubaktuatoren mechanisch nur äußerst aufwendig zu realisieren sind, sehr schwer sind, und eine aufwendige Steuerungs- und Hydraulikmitteleinleitungstechnik besitzen müssen, wenn bspw. der Hubaktuator, wie regelmäßig vorzufinden, durch hydraulisch betriebene Kolben-Zylinder-Systeme gebildet wird, die kostenaufwendig in der Wartung sind und äußerst hohe Gesamtgestehungskosten aufweisen.

Diese bekannten Konstruktionsprinzipien von Ladebordwandsystemen (Bär Hydrofalt Cargo) sind bei modernen Ladebordwandkonstruktionen verlassen worden. So ist bspw. bei dem schon erwähnten Ladebordwandsystem gem. der EP-A-0 808 747 ein Ladebordwandsystem realisiert, das nur einen einzigen Hubaktuator aufweist. Dieses bekannte Ladebordwandsystem moderner Bauart hat sich mit außerordentlich großem Erfolg bei den Anwendern durchgesetzt, da es ein bedeutend geringeres Gewicht als die klassischen Konstruktionen (Bär Hydrofalt Cargolift) aufweist, sehr viel kostengünstiger herstellbar ist, ein sehr viel geringeres Gewicht aufweist und eine sehr viel einfachere, aber sicherere Steuerungstechnik aufweist und sehr viel geringere Gestehungskosten aufweist, als bisherige Konstruktionen mit zwei Hubaktuatoreinrichtungen.

Bei dem aus der EP-A-0 808 747 bekannten Ladebordwandsystem wird dann, wenn am Ende des Absenkvorganges der Ladebordwand, wenn diese auf einem Untergrund in abgesenkter Stellung aufliegt, die Ladebordwand mit ihrem freien Kantenbereich auf den Untergrund abgekippt, so daß nach Art einer gering geneigten Rampe die Lasten, die auf die Ladebordwand mittels geeignetem Ladegerätes heraufgerollt bzw. heraufgeschoben werden sollen, faktisch absatzfrei darauf verbracht und im umgekehrten Falle auch absatzfrei von der Ladebordwand auf den Untergrund verschoben werden können.

Dieser Abkippvorgang erfolgt bei dem bekannten Ladebordwandsystem mit einem einzigen Hubaktuator durch geeignete Betätigung des Hubaktuators bzw. einer entsprechenden weiteren gesonderten Steuerung des Hubaktuators, nachdem die Ladebordwand in ihrer auf einem Untergrund abgesenkten Stellung aufliegt. Diese gesonderte Steuerungsnotwendigkeit des Hubaktuators, was gleichermaßen auch für den umgekehrten Fall gilt, bei dem die Ladebordwand aus dem abgekippten Zustand aber noch auf den Untergrund im abgesenkten Zustand ruhend in die horizontale Stellung angehoben wird, um sicherzustellen, daß die darauf befindliche Last nicht von der Ladebordwand herunterrutscht, ist mit zusätzlichem Steuerungsaufwand verbunden, was einerseits eine Unsicherheitsquelle für das gesamte Steuerungssystem und somit für die gesamte Sicherstellung der Funktion des Ladebordwandsystems bedeutet und andererseits ist diese Steuerung, da technisch aufwendig, ein beträchtlich kostenvergrößernder Faktor in bezug auf die Gesamtgestehungskosten eines derartigen Ladebordwandsystems.

Es ist somit Aufgabe der vorliegenden Erfindung, ein Ladebordwandsystem der eingangs genannten Art zu schaffen, das einen einzigen Hubaktuator aufweist, mit dem ein Abkippen der Ladebordwand, wenn diese auf einem Untergrund in abgesenkter Stellung aufliegt, zu schaffen, bei dem auf sehr einfache und somit kostengünstig zu realisierende Weise die Ladebordwand mit ihrem freien Kantenbereich auf den Untergrund abgekippt werden kann, so daß dieser freie Kantenbereich stufenfrei auf dem Untergrund aufliegt und die Ladebordwand wiederum in die Horizontale vor Einleitung des eigentlichen Hubvorganges sicher zurückgekippt werden kann, ohne daß es aufwendiger konstruktiver und steuerungstechnischer Maßnahmen bedarf, so daß das Ladebordwandsystem noch einfacherer und noch kostengünstiger und noch betriebssicherer herstellbar bzw. bereitstellbar ist als bekannte Konstruktionen mit einem einzigen Hubaktuator.

Gelöst wird die Aufgabe gem. der Erfindung dadurch, daß die beabstandeten Gelenkelemente über ein Verbindungselement miteinander verbunden sind.

Mittels der erfindungsgemäßen Lösung, die mechanisch einfach und genial ist, kann in der auf dem Untergrund abgesenkten Stellung der Ladebordwand infolge des durch die Gravitation auf die Ladebordwand ausgeübten Drehmoments der Kippvorgang der Ladebordwand selbständig und in bezug auf beide voneinander beabstandete Tragwerke synchron erfolgen, indem nämlich beim Aufliegen der Ladeplattform auf dem Untergrund nachfolgend eine Drehung des Tragwerkes durch im wesentlichen horizontale Verschiebung des oberen Tragarms des zweiten Tragwerkes, das die Hubaktuatoreinrichtung nicht aufweist, erfolgt, so daß infolge der Verschiebung eine Verdrehung des Gelenkhebels erfolgt, an dem der zweite Tragarm angelenkt ist, wobei durch das Verbindungselement, das mit dem Gelenkhebel verbunden ist, die auf das Gelenkelement ausgeübte Kraft auf das andere Gelenkelement übertragen wird, an dem das erste Tragwerk sowie der Hubaktuator drehbar befestigt sind.

Das Verbindungselement, das in Form eines Rohres ausgebildet sein kann, stellt also eine synchrone Schwenkbewegung beider Gelenkelemente sicher, so daß infolge der auf die Ladeplattform einwirkenden Gravitationskraft eine streng parallele Kippung zwischen erstem und zweitem Tragwerk der Ladebordwand durch rein mechanisch bedingte Synchronsteuerung beider Tragwerke über das Verbindungselement erfolgt.

Durch normale Betätigung des Hubaktuators wird, entgegen der Gravitationskraft, die Ladeplattform durch entsprechendes synchrones Zurückschwenken über das torsionssteife Verbindungselement infolge der Betätigung des Hubaktuators in die im wesentlichen horizontale Lage zurückgeschwenkt, so daß dann nachfolgend die normale Hubbewegung auf ein vorbestimmtes Niveau, bspw. das Niveau der Ladefläche eines Lastkraftwagens, eingeleitet werden kann.

Der Vorteil der erfindungsgemäßen Lösung besteht in ihrer bestechend einfachen mechanischen Realisierung und der damit einhergehenden immer gewährleisteten Funktionssicherheit. Das Steuersystem für das erfindungsgemäße Ladebordwandsystem kann deshalb sehr einfach realisiert werden und nur auf den Hebe- und Absenkvorgang der Ladebordwand beschränkt sein. Dadurch werden erhebliche Kosten eingespart und die Betriebssicherheit des gesamten Ladebordwandsystems wird dadurch erheblich erhöht.

Gem. einer vorteilhaften Ausgestaltung des Ladebordwandsystems werden die Gelenkelemente jeweils durch ein Paar im wesentlichen parallel voneinander beabstandeter Gelenkelementplatten gebildet. Auf diese Weise ist es vorteilhaft möglich, die daran drehbar angelenkten Tragwerke und den an einem Tragwerk angelenkten Hubaktuator auf einfache Weise genau in der Drehebene der Tragwerke zu positionieren, und so die Drehmomente, die quer zur Hubund Absenkrichtung der Ladeplattform beim Heben und beim Absenken einer Last entstehen, vernachlässigbar klein zu halten. Vorzugsweise ist das Verbindungselement an den jeweilig zueinanderweisenden Gelenkelementplatten beider Gelenkelemente befestigt, wodurch die Konstruktion des Ladebordwandsystems erheblich vereinfacht werden kann, ohne daß das angestrebte Ziel, ein Querdrehmoment zu vermeiden, beeinträchtigt wird.

Gem. einer weiteren vorteilhaften Ausgestaltung des Ladebordwandsystems umfaßt das erste Tragwerk zwei im wesentlichen parallel voneinander beabstandete erste Tragwerke, wobei die ersten Tragwerke über eine erste Drehachse am Gelenkelement drehbar befestigt sind und über eine zweite, am gegenüberliegenden Ende der ersten Tragarme angeordnete zweite Drehachse mit einem ersten Ende des Hubaktuators befestigt sind und wobei das zweite Ende des Hubaktuators über eine Drehachse drehbar am Gelenkelement befestigt ist. Zwar ist es grundsätzlich möglich, das erste Tragwerk anders als vorbeschrieben auszubilden, das vorbeschriebene hat jedoch den großen Vorteil, daß dabei auf einfache Weise eine sehr stabile konstruktive Lösung gefunden worden ist.

Bei einer weiteren anderen vorteilhaften Ausgestaltung des Ladebordwandsystems umfaßt das erste Tragwerk einen zweiten Tragarm, der an seinem ersten Ende mit den beiden ersten Tragarmen verbunden ist, wobei das zweite Ende eine im wesentlichen orthogonal zu den beiden ersten Tragarmen verlaufende Drehachse aufweist, über die der zweite Tragarm drehbar mit der Ladebordwand befestigt ist. Auch hier gilt, daß grundsätzlich der zweite Tragarm an sich beliebig geeignet ausgestaltet sein kann, erfindungsgemäß ist aber eine einfache konstruktive Realisierung des zweiten Tragarmes im ersten Tragwerk möglich.

Vorteilhaft ist es, daß der zweite Tragarm im wesentlichen in der Mittelebene zwischen den beiden ersten Tragarmen angeordnet ist, wobei eine sehr einfache und kostengünstige Ausbildung und Integration des zweiten Tragarmes in das erste Tragwerk erreichbar ist.

Bei einer noch anderen weiteren vorteilhaften Ausführungsform des Ladebordwandsystems umfaßt das zweite Tragwerk zwei im wesentlichen parallel voneinander beabstandete, bezogen auf die Heberichtung der Ladebordwand obere erste Tragarme, wobei die ersten Tragarme über eine erste Drehachse am Gelenkelement drehbar befestigt sind und über eine zweite, am anderen Ende der ersten Tragarme angeordnete zweite Drehachse, die im wesentlichen orthogonal zu den ersten Tragarmen und parallel zur Drehachse verläuft, drehbar mit der Ladebordwand befestigt sind. Auch hier gilt, was schon vorangehend im Zusammenhang mit dem ersten Tragwerk ausgeführt worden ist, daß auf die vorbeschriebene Weise das zweite Tragwerk ebenfalls konstruktiv sehr einfach ausgebildet sein kann, um beispielsweise eine anzustrebende Bedingung zu erfüllen, daß die Drehpunkte der Elemente des zweiten Tragwerks, in der auch ein Klappaktuator als Teil des Parallelogramms des ersten Tragwerks angeordnet sein kann, in einer Drehebene liegen können, obwohl grundsätzlich auch andere Konstruktionen denkbar sind, die die voraufgeführte Grundbedingung der erfindungsgemäßen vorgeschlagenen Lösung erfüllen können. Die hier aber vorteilhaft vorgeschlagene Lösung ist grundsätzlich bei einfacher konstruktiver Ausgestaltung sehr stabil und somit verhältnismäßig kostengünstig herstellbar.

Auch ist es vorteilhafterweise möglich, das Ladebordwandsystem derart auszubilden, daß das zweite Tragwerk einen zweiten, bezogen auf die Heberichtung der Ladebordwand unteren Tragarm umfaßt, der mit seinem ersten Ende drehbar am Fahrzeug befestigt ist und mit seinem zweiten Ende um eine Drehachse im wesentlichen orthogonal zur Längsachse des unteren dritten Tragarmes drehbar mit der Ladebordwand befestigt ist, wobei die Längsachse im wesentlichen in der die Schwenkebene bildenden Ebene des zweiten Tragwerks verläuft. Hier gilt wiederum, daß dadurch das zweite Tragwerk konstruktiv sehr einfach zur Erfüllung der anzustrebenden Bedingung ausgebildet werden kann, daß die Drehpunkte der Elemente des zweiten Tragwerks in einer Ebene liegen, obwohl grundsätzlich auch hier andere konstruktive Lösungen möglich sind, die diese anzustrebende Bedingung erfüllen können.

Wie eingangs im Zusammenhang mit der Schilderung des aus der EP-A-0 808 747 bekannten Ladebordwandsystems mit einem einzigen Hubaktuator hervorgehoben, ist es auch möglich, dann, wenn das Ladebordwandsystem auch eine Klappfunktion der Ladebordwand aus der Horizontalen in die Vertikale und umgekehrt durchführen können soll, dafür einen einzigen Klappaktuator vorzusehen. Dabei ist es vorteilhaft, daß dann der untere dritte Tragarm des zweiten Tragwerks durch einen Klappaktuator gebildet wird, d.h. auf diese sehr einfache Weise den Klappaktautor in das zweite Tragwerk zu integrieren.

Es ist vorteilhaft, den Hubaktuator und, wenn, wie im vorangegangenen Absatz beschrieben, auch ein Klappaktuator bei der erfindungsgemäßen Ladebordwand vorgesehen ist, eine hydraulisch oder pneumatisch betriebene Kolben-Zylindereinrichtung zu realisieren.

Es ist aber auch grundsätzlich möglich, den Klappaktuator und/oder den Hubaktuator durch eine elektromagnetisch betriebene Einrichtung zu realisieren, bspw. mittels einer elektromotorisch angetriebenen Gewindespindel, die ganz oder teilweise das entsprechende Element des ersten und/oder des zweiten Tragwerkes bilden bzw. bildet.

Die eigentliche konstruktive Ausgestaltung der Tragarme kann auf beliebige geeignete Weise gewählt werden, d.h. die Tragarme können als Formteile bspw. aus Stahlguß oder dgl. hergestellt werden. Es hat sich jedoch als sehr vorteilhaft herausgestellt, die Tragarme im wesentlichen plattenförmig auszubilden, so daß diese aus plattenförmigen Halbzeugen, bspw. aus Stahlplatten oder sonstigen beliebigen anderen geeigneten plattenförmigen Werkstoffen, durch Ausschneiden oder Ausstanzen auf einfache und damit kostengünstige Weise hergestellt werden können. Vorteilhafterweise gilt gleiches auch für den zweiten Tragarm des ersten Tragwerkes.

Das erfindungsgemäße Ladebordwandsystem kann grundsätzlich auf beliebige geeignete Weise an einer Tragkonstruktion eines Fahrzeugs befestigt werden, an der normalerweise Ladebordwandsysteme dieser Art befestigt werden. Regelmäßig werden die Tragwerke eines Fahrzeugs durch zwei in Fahrzeuglängsrichtung angeordnete, parallel voneinander beabstandete U-profilförmige Träger gebildet, die auch die Antriebsachse bzw. Achsen des Fahrzeugs aufnehmen. Vielfach werden Ladebordwandsysteme dieser Art entweder direkt an derartigen Tragwerken durch Schraub- und/oder Schweißverbindungen befestigt oder mittels mehr oder weniger aufwendiger Befestigungskonstruktionen.

Um die Befestigung des Ladebordwandsystems sehr einfach und kostengünstig ausbilden zu können, so daß auch eine nachträgliche Montage der Ladebordwand am Tragwerk möglich ist, was gleichermaßen auch für eine Demontage wichtig ist, erfolgt vorteilhafterweise die Befestigung des das erste Tragwerk aufnehmenden Gelenkelements am Fahrzeug über ein gesondertes Verbindungselement, wobei ebenfalls auf sehr vorteilhafte Weise die Befestigung des den oberen ersten Tragarm des zweiten Tragwerks aufnehmenden Gelenkelements am Fahrzeug über ein gesondertes Verbindungselement erfolgt, wobei die Befestigung des unteren dritten Tragarmes des zweiten Tragwerks am Fahrzeug vorzugsweise ebenfalls über das gesonderte Verbindungselement erfolgt, an dem auch das Gelenkelement befestigt ist, das die oberen ersten Tragarme des zweiten Tragwerks aufnimmt.

Das Verbindungselement kann an sich eine beliebige geeignete konstruktive Struktur aufweisen, es hat sich jedoch als vorteilhaft herausgestellt, dieses plattenförmig auszubilden, was wiederum eine einfache Herstellbarkeit, bspw. durch Stanzung oder Ausschneiden aus plattenförmigen Halbzeugen oder Werkstoffplatten, zur Folge hat.

Aufgrund gesetzlicher Vorschriften ist es in vielen Ländern zwingend erforderlich, daß insbesondere Lastkraftfahrzeuge in ihrem hinteren Bereich einen sogen. Unterfahrschutz aufweisen, mit dem verhindert werden soll, daß bei Auffahrunfällen im Straßenverkehr sich das auf ein voranfahrendes Lastkraftfahrzeug auffahrende nachfolgende Fahrzeug unterhalb des Chassis bzw. der das Chassis bildenden Rahmen des Lastkraftfahrzeuges schiebt. Ohne das Vorsehen eines derartigen Unterfahrschutzes würde auch beim Vorsehen eines erfindungsgemäßen Ladebordwandsystems am hinteren Teil eines Lastkraftwagens das Unterfahren eines nachfolgenden Fahrzeugs nicht verhindert werden können, wenn sich bspw. die Ladeplattform in angehobener Stellung befindet.

Es ist deshalb äußerst vorteilhaft, auch für diesen Fall einen Unterfahrschutz vorzusehen, und zwar vorteilhafterweise dadurch, daß bei dem Ladebordwandsystem selbst das erste Tragwerk und das zweite Tragwerk über ein im wesentlichen quer zu den Tragwerken verlaufendes Halteelement verbunden sind. Dieses Halteelement, das vorzugsweise rohrförmig ausgebildet sein kann, wird infolge seiner kraftschlüssigen Verbindung mit den beiden Tragwerken bei angehobener bzw. Transportstellung der Ladebordwand in einer derartigen Höhe positioniert sein, daß ein nachfolgendes Fahrzeug am Unterfahren des derart ausgerüsteten Fahrzeugs gehindert ist.

Das vorangehend aufgeführte und eingehend beschriebene Abkippprinzip der Ladebordwand in ihrer auf einem Untergrund abgesenkten Stellung und dem anschließenden Abkippen ihrer freien Kante auf dem Untergrund eignet sich prinzipiell für beliebige Ladebordwandkonstruktionen, bspw. auch für einteilige Ladebordwände, mit denen nicht nur ein Absenken und Anheben einer Last in vertikaler Richtung, sondern auch ein Verkippen der Ladebordwand aus der Horizontalen in die Vertikale und umgekehrt möglich ist. Vorzugsweise kann deshalb das erfindungsgemäße Ladebordwandsystem auch bei Ladebordwandsystemen verwendet werden, bei denen die Ladebordwand auch als Klappladebordwand ausgebildet ist.

Schließlich ist es außerordentlich vorteilhaft, das Ladebordwandsystem derart auszubilden, daß sichergestellt ist, daß die Kräfteeinleitungspunkte des Hubaktuators in das als Hubtragwerk ausgebildete erste Tragwerk in der durch die Drehpunkte A₁, C₁, D, E₁ der Elemente des ersten Tragwerks gebildeten Ebene liegen, in der der Hubaktuator des ersten Tragwerks in bezug auf die von ihm auf das erste Tragwerk ausgebildeten Kräfte einwirken, und daß vorteilhafterweise die Drehpunkte A₂ , B, C₂, E₂ der Elemente des zweiten Tragwerks in einer Ebene liegen.

Der Vorteil dieser Ausgestaltungen besteht im wesentlichen darin, daß aufgrund der Anordnung der im wesentlichen parallelogrammförmigen Tragwerke und der Anordnung der Hubzylindereinrichtung jeweils in der Drehebene der jeweiligen Tragwerke, d.h. also nicht in Querrichtung versetzt zueinander, keine Drehmomente in Querrichtung auftreten können, so daß gewährleistet ist, daß sich keine Spalte in vertikaler und horizontaler Richtung zwischen der Ladebordwand bei horizontaler Ausrichtung relativ zur Ladeebene eines Fahrzeugs ausbilden können. Ein weiterer wesentlicher Vorteil dieser Ausgestaltung des Ladebordwandsystems besteht darin, daß keine ungleichgemäße Belastung auf das das Hubtragwerk bildende erste Tragwerk und das zweite Tragwerk ausgeübt wird, so daß dieses über lange Zeiträume stabil bleibt und somit auch ein notwendiger Wartungsaufwand auf ein Minimum reduziert wird.

Bei einer speziellen Form des erfindungsgemäßen Ladebordwandsystems, wie es in vorteilhafter Ausgestaltung vorangehend beschrieben worden ist, ist es ebenfalls vorteilhaft, wenn die Kräfteeinleitungspunkte des Klappaktuators, wenn dieser Teil des zweiten Tragwerks ist, in der durch die Drehpunkte A₂ , B, C₂, E₂ gebildeten Ebene liegen, in der der Klappaktuator in bezug auf die von ihm in dem Tragwerk ausgeübten Kräfte einwirken.

Die Vorteile, die vorangehend im Zusammenhang mit dem als Hubtragwerk ausgebildeten ersten Tragwerk dargelegt worden sind, gelten sinngemäß identisch für das zweite Tragwerk, wenn dieses als Klapptragwerk ausgebildet ist. Vorteilhaft ist es bei dieser Ausgestaltung, daß sich dann ebenfalls auch keine Spalte bei vertikaler Ausrichtung der Ladebordwand in dem den Laderaum eines Fahrzeug verschließenden Zustand bilden können.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem gem. der Erfindung in angehobener Stellung,
- Fig. 2: eine Darstellung gem. Fig. 1, bei der sich die Ladebordwand in abgesenkter Stellung befindet,
- Fig. 3: eine Darstellung gem. den Fig. 1 und 2, bei der jedoch gegenüber der Darstellung von Fig. 2 die Ladeplattform auf einem Untergrund abgekippt ist,
- Fig. 4: eine Darstellung des Ladebordwandsystems in der Seitenansicht in angehobener Stellung,
- Fig. 5: eine Darstellung gem. Fig. 4, bei der sich die Ladebordwand in abgesenkter Stellung befindet,
- Fig. 6: eine Darstellung gem. den Fig. 4 und 5, bei der jedoch gegenüber der Darstellung von Fig. 5 die Ladeplattform auf einem Untergrund abgekippt ist,
- Fig. 7: ein Schema der Elemente des ersten Tragwerks und des zweiten Tragwerks sowie des daran angreifenden Hubaktuators und
- Fig. 8: ein Schema gem. der Darstellung von Fig. 7, bei der außer dem Hubaktuator noch ein einen Teil des zweiten Tragwerks bildenden Klappaktuator vorgesehen ist.

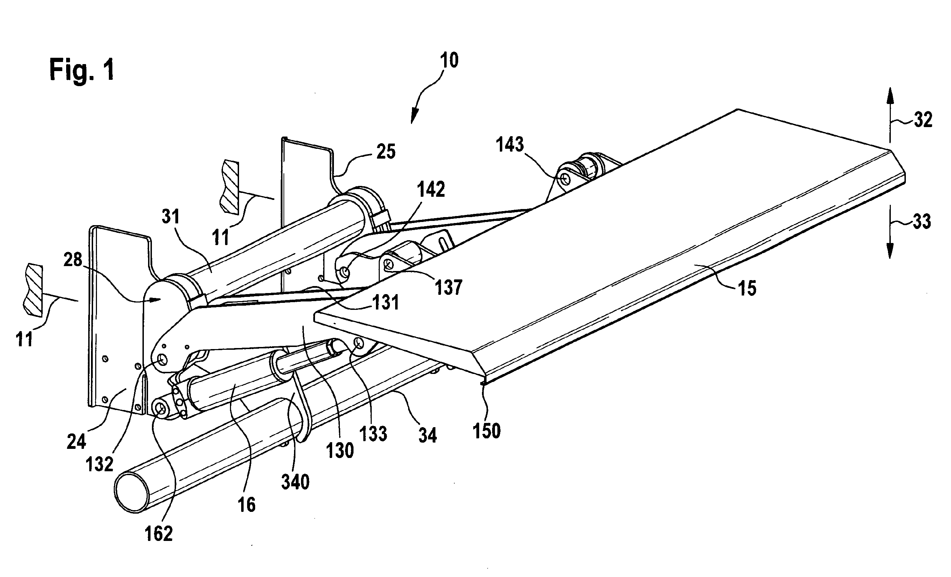

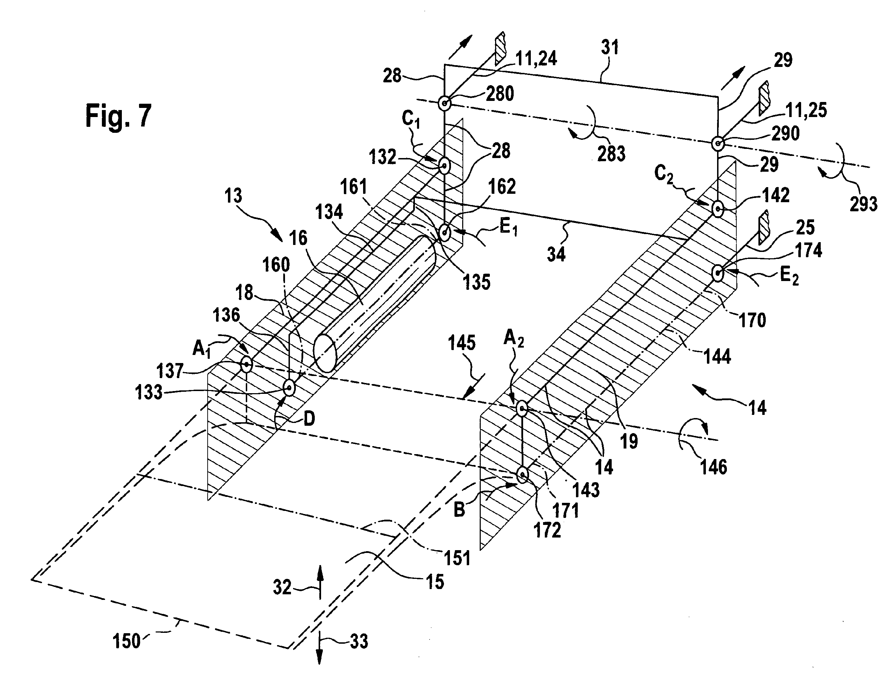

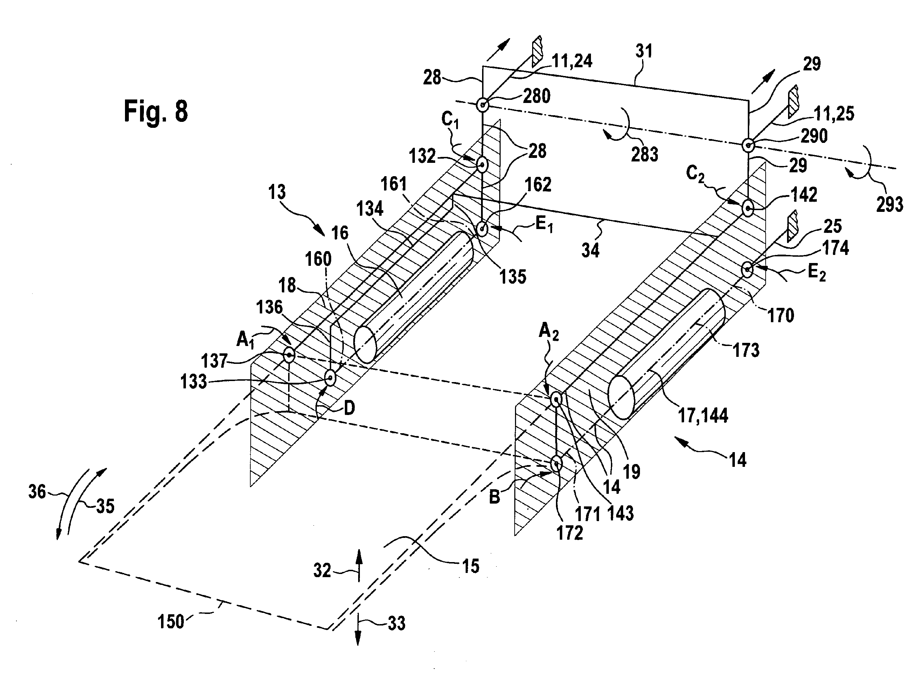

Es wird zunächst Bezug genommen auf das in den Fig. 1 bis 3 perspektivisch dargestellte Ladebordwandsystem 10, das anhand dieser Darstellungen bezüglich seines grundsätzlichen Aufbaues beschrieben wird. Das Ladebordwandsystem 10 umfaßt im wesentlichen ein durch ein erstes Tragwerk 13 gebildetes Hubtragwerk und ein zweites Tragwerk 14, die im wesentlichen parallel voneinander beabstandet an einem Fahrzeug 11, in den Figuren lediglich schematisch dargestellt, über Verbindungselemente 24, 25 befestigt werden, wobei auf die Verbindung bzw. Befestigung im einzelnen noch weiter unten eingegangen wird. Das erste und das zweite Tragwerk 13, 14 bilden zusammen Gelenkelementen 28, 29, das zweite Tragwerk 14 ggf. zusätzlich zusammen mit einem Klappaktuator 17, vgl. Fig. 8, eine parallelogrammförmige Struktur, wie sie insbesondere aus den Fig. 7 und 8 ersichtlich ist, worauf aber im einzelnen ebenfalls noch weiter unten eingegangen wird. Mit dem ersten und dem zweiten Tragwerk 13, 14 ist eine im wesentlichen plattenförmige Ladebordwand 15 zum Heben und Absenken einer Last (ohne Last dargestellt) und zum Verschließen eines Stauraumes des Fahrzeugs 11 drehbar verbunden. Mit dem ersten Tragwerk 13 wirkt ein Hubaktuator 16 zum Heben und Senken der Ladebordwand 15 zusammen. Der ggf. ebenfalls vorgesehen werden könnende Klappaktuator 17, vgl. Fig. 8, der zum Verschwenken der Ladebordwand 15 von der Horizontalen in die Vertikale und umgekehrt dient, wirkt mit dem zweiten Tragwerk 14 zusammen und ist dann Teil seiner parallelogrammförmigen Struktur. In den Fig. 1 bis 7 ist das Ladebordwandsystem 10 lediglich mit einem Hubaktuator 16 versehen, d.h. das dort dargestellt Ladebordwandsystem 10 kann eine Klappfunktion der Ladebordwand 15 nicht ausführen.

Das erste Tragwerk 13, in den Figuren links dargestellt, umfaßt zwei im wesentlichen parallel voneinander beabstandete erste Tragarme 130, 131, die über eine erste Drehachse 132 an einem Gelenkelement 29 drehbar befestigt sind. Die am entgegengesetzten Ende der ersten Tragarme 130, 131 ausgebildete Drehachse 133 ist mit dem ersten Ende 160 des Hubaktuators 16 befestigt, vgl. auch die Fig. 7 und 8. Das zweite Ende 161 des Hubaktuators 16 ist ebenfalls um eine Achse 162 drehbar am Gelenkelement 28 befestigt.

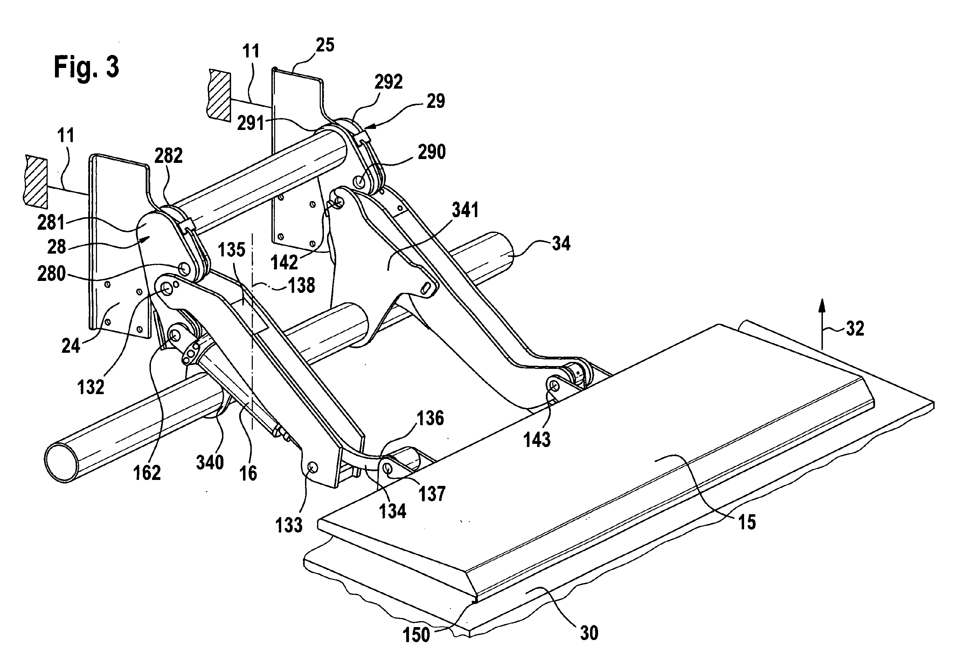

Im wesentlichen in der Mittelebene 138, vgl. Fig. 3, dort durch eine strichpunktierte Linie schematisch dargestellt, zwischen den ersten Tragarmen 130, 131 ist ein zweiter Tragarm 134 vorgesehen, vgl. auch die Fig. 7 und 8. Der zweite Tragarm 134 ist mit seinem ersten Ende 135 mit den beiden ersten Tragarmen 130, 131 derart befestigt, daß eine traversenartige Überbrückung der beiden ersten Tragarme 130, 131 erreicht wird. Das zweite Ende 136 des zweiten Tragarmes 134 ist über eine im wesentlichen orthogonal zu den ersten beiden Tragarmen 130, 131 verlaufende Drehachse 137 drehbar mit der Ladebordwand befestigt.

Das zweite Tragwerk 14, das ähnlich wie das erste Tragwerk 13 ausgebildet ist, weist wiederum zwei im wesentlichen parallel voneinander beabstandete erste Tragarme 140, 141 auf, die über eine erste Drehachse 142 am Gelenkelement 29 drehbar befestigt sind. Die am anderen Ende der ersten Tragarme 140, 141 vorgesehene zweite Drehachse 143 ist im wesentlichen orthogonal zu den ersten Tragarmen 140, 141 ausgebildet und verläuft im wesentlichen parallel zur ersten Drehachse 142. Über die Drehachse 143 sind die beiden ersten Tragarme 140, 141 drehbar mit der Ladebordwand 15 befestigt.

Dann, wenn ein Klappaktuator 17 vorgesehen ist, vgl. Fig. 8, bildet dieser einen Schenkel des parallelogrammförmig ausgebildeten zweiten Tragwerks 14. Der Klappaktuator 17 ist mit seinem ersten Ende 170 um eine Drehachse 174 drehbar am Verbindungselement 25 befestigt, vgl. auch Fig. 8. Mit seinem zweiten Ende 171 ist der Klappaktuator 17 um eine Drehachse 172, die im wesentlichen orthogonal zur Längsachse 173 des Klappaktautors 17 ausgebildet ist, drehbar an der Ladebordwand 15 befestigt. Die (gedachte) Längsachse 173 verläuft im wesentlichen in der die Schwenkebene bildenden Ebene 19 des zweiten Tragwerks, vgl. auch das gestrichelte Feld in den Fig. 7 und 8.

Das als Hubtragwerk ausgebildete Tragwerk 13, an dem der Hubaktuator 16 angeordnet ist, ist über das Gelenkelement 28, das durch ein Paar im wesentlichen parallel voneinander beabstandeter Gelenkelementplatten 281, 282 gebildet wird, über eine Gelenkelementachse 280 drehbar, über ein Verbindungselement 24 mit dem Fahrzeug 11 an geeigneter Stelle verbunden, bspw. am Chassisrahmen des Fahrzeugs 11.

Auf ähnliche Weise ist das zweite Tragwerk 14 über ein Gelenkelement 29, das ebenfalls durch ein Paar im wesentlichen parallel voneinander beabstandeter Gelenkelementplatten 291, 292 gebildet werden kann, über eine Gelenkelementachse 290 drehbar, über ein weiteres Verbindungselement 25 mit dem Fahrzeug 11 an geeigneter Stelle verbunden, bspw. am Chassisrahmen des Fahrzeugs 11.

Die Gelenkelementachsen 280, 290 sind im wesentlichen, bezogen auf die Darstellung in den Figuren, horizontal und parallel zur Fläche der Ladebordwand 15 verlaufend angeordnet. Das zweite Tragwerk 14, das einen zweiten, bezogen auf die Heberichtung 22 der Ladebordwand 15, einen unteren dritten Tragarm 144 umfaßt, was im Zusammenhang mit den Fig. 7 und 8 noch näher erläutert wird, ist mit seinem unteren dritten Tragarm 144 mit dessen erstem Ende 170 drehbar am Fahrzeug 11 bzw. drehbar am Verbindungselement 25 befestigt, das, wie beschrieben, am Fahrzeug 11 an geeigneter Stelle befestigt ist.

Die beiden voneinander beabstandeten Gelenkelemente 28, 29 sind über ein rohrförmiges Verbindungselement 31 torsionssteif, d.h. absolut fest, miteinander verbunden. Über das Verbindungselement 31 können somit auf das erste Tragwerk 13 einwirkende Kräfte auf das zweite Tragwerk direkt übertragen werden und in umgekehrter Richtung können auf das zweite Tragwerk 14 einwirkende Kräfte direkt auf das erste Tragwerk 13 übertragen werden. Bei der in den Figuren dahingestellten Ausführungsform des Ladebordwandsystems 10 ist das Verbindungselement 21 an den jeweilig zueinanderweisenden Gelenkelementplatten 282, 291 beider Gelenkelemente 28, 29 befestigt, bspw. durch Schweißung oder durch eine geeignet ausgebildete, kraftschlüssig wirkende Passung zwischen den Gelenkelementen 28, 29 und dem Verbindungselement 31. Die Gelenkelemente 28, 29 bzw. die paarförmig parallel voneinander beabstandeten Gelenkelementplatten 281, 282; 291, 292 können im, bezogen auf die Darstellung des Ladebordwandsystems 10 in den Figuren, vertikal oberhalb der jeweiligen Gelenkelementachsen 280, 290 soweit vertikal nach oben auskragen, daß auch bei Ausbildung der jeweiligen Gelenkelemente 28, 29 durch die parallel voneinander beabstandeten Gelenkelementplatten 281, 282; 291, 292 beide jeweiligen Gelenkelementplatten mit dem Verbindungselement 31 verbunden werden können. Durch diese Ausgestaltung der Gelenkelemente 28, 29 wird die torsionssteife Verbindung zwischen beiden Tragwerken 13, 14 über das Verbindungselement 31 nochmals verbessert.

Es wird nun Bezug genommen auf die Fig. 7 und 8, in denen das Hebelschema des parallelogrammförmigen, als Hubtragwerk ausgebildeten ersten Tragwerks 13 und des zweiten Tragwerks 14 i.V.m. dem am ersten Tragwerk 13 angreifenden Hubaktuator 16 gezeigt ist. Bei der Fig. 8 ist im zweiten Tragwerk 13 zusätzlich ein Klappaktuator 17 integriert, der anstelle des dritten Tragarmes 144 des zweiten Tragwerks 14 fungiert. Die Kräfteeinleitungspunkte des Hubaktuators in das erste Tragwerk 13 liegen in der jeweiligen Ebene der Drehpunkte A₁, D₁, D, E₁, der Drehachsen 137, 132, 133, 162 des ersten Tragwerks 13.

Die Drehpunkte A₂, B, C₂, E₂ der Elemente des zweiten Tragwerks 14 liegen ebenfalls in einer Ebene, vgl. Fig. 7.

Die Kräfteeinleitungspunkte des Klappaktuators 17 liegen dann, wenn ein Klappaktuator vorgesehen ist, vgl. Fig. 8, ebenfalls in der Ebene 19 der Drehpunkte A₂, B, C₂, E₂ der Achsen 143, 172, 142, 174 des zweiten Tragwerks 14, wobei diese Achsen 143, 172, 142, 174 immer die Achsen des zweiten Tragwerks 14 bilden, unabhängig davon, ob ein Klappaktuat 17, vgl. Fig. 8, oder kein Klappaktuator vorgesehen ist, vgl. Fig. 7.

Das erste Tragwerk 13 und das zweite Tragwerk 14 sind über ein Halteelement 34 im wesentlichen quer zu den Tragwerken 13, 14 verlaufend verbunden. Das Halteelement 34 kann rohrförmig ausgebildet sein und hat einerseits die Funktion eines Unterfahrschutzes, um zu verhindern, daß bei Auffahrunfällen ein einem Fahrzeug 11, an dem das Ladebordwandsystem 10 angeordnet ist, nachfolgendes Fahrzeug unter den Chassisrahmen des Fahrzeug 11 fahren kann, es hat andererseits aber auch die Funktion, daß die beiden Tragwerke 13, 14 zusätzlich noch torsionssteifer miteinander verbunden werden. Die Verbindung des Halteelementes 34 mit den Tragwerken 13, 14 kann über gesonderte Befestigungselemente 340, 341 erfolgen.

Da das Anheben, Heberichtung 32, und das Absenken, Senkrichtung 33, der Ladebordwand 15 mittels des erfindungsgemäßen Ladebordwandsystems 10 auf an sich bekannte Weise und, wenn auch ein Klappaktuator 17 vorgesehen ist, vgl. Fig. 8, ebenso wie das Hochklappen der Ladebordwand 15 aus der Vertikalen sowie das Herunterklapprichtung 36 in eine horizontale Stellung und von der Horizontalen, Hochklapprichtung 35, in eine vertikale Stellung auf an sich bekannte Weise erfolgt, dem Fachmann also bekannt ist, wird hier auf den eigentlichen Betätigungsvorgang sowie die Steuerung des Hubaktuators 16 und des Klappaktuators 17, wenn dieser vorgesehen ist, die hydraulisch und/oder pneumatisch und/oder elektrisch betrieben werden können, nicht weiter eingegangen.

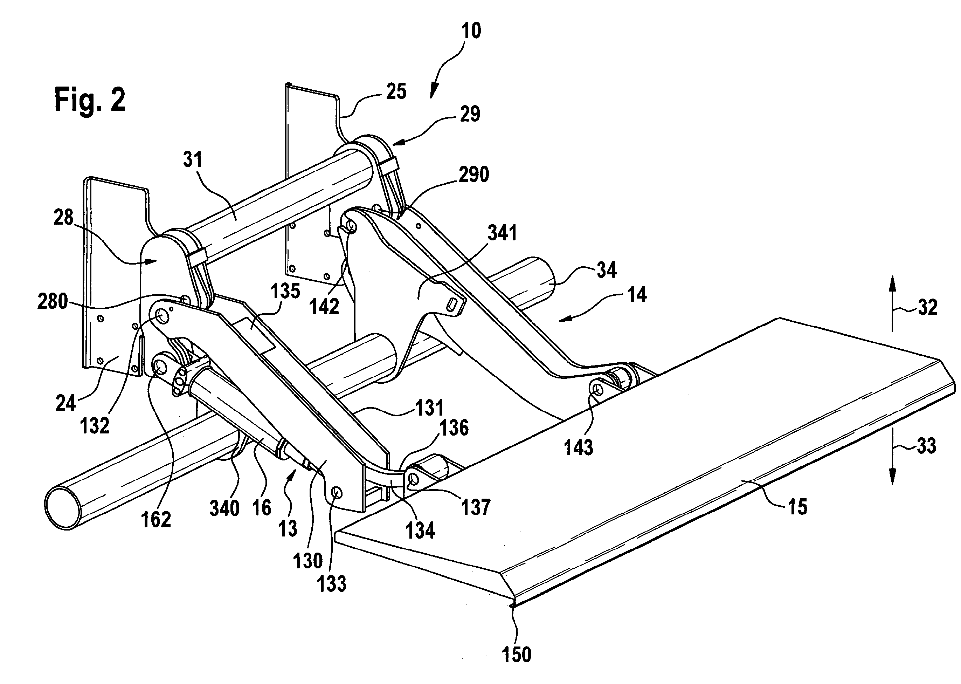

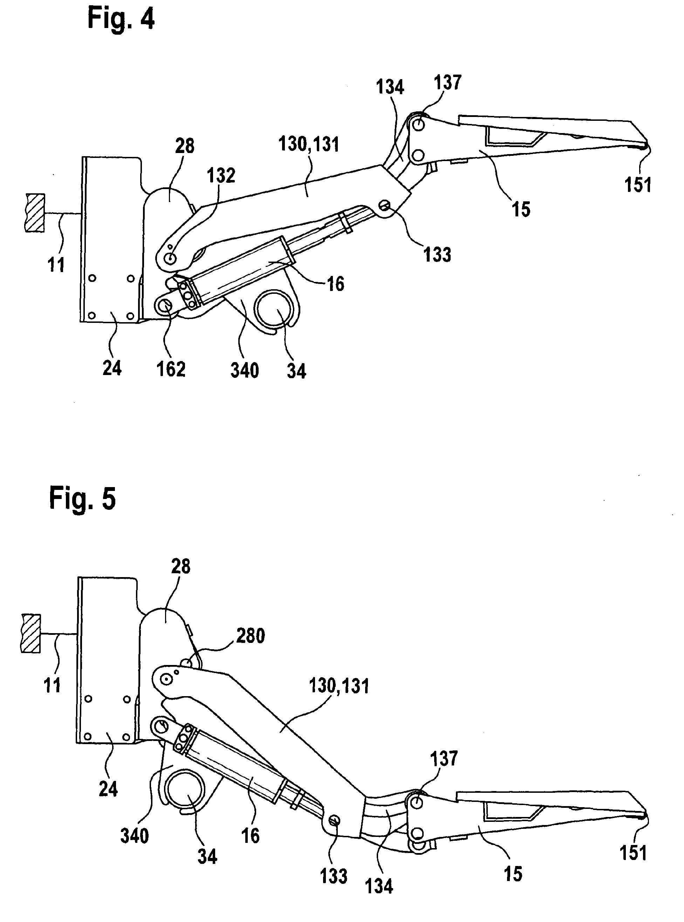

Es wird lediglich auf den für das Ladebordwandsystem 10 gem. der Erfindung speziellen Absenk- bzw. Kippvorgang eingegangen, wenn am Ende des Absenkvorganges der Ladebordwand 15 die Ladebordwand 15 auf dem Untergrund 30 aufliegt, d.h. in einem Zustand, wie er in den Fig. 2 und 5 dargestellt ist.

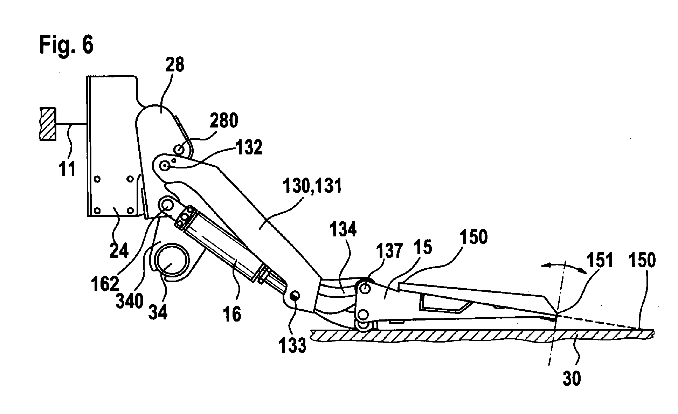

In diesem Zustand befindet sich der Hubaktuator 16 in einem antriebs- bzw. betriebslosen Zustand. Bedingt durch die auf die Ladeplattform 15 einwirkende Gravitationskraft entsteht ein Drehmoment um die feste Drehachse 172 des dritten Tragarms 144 des zweiten Tragwerks 14 (Fig. 7), oder um die bei unbetätigtem Klappaktuator 17 dann ebenfalls feste Drehachse 172, wobei in diesem Falle der Klappaktuator 17 den dritten Tragarm 144 des zweiten Tragwerks 14 bildet (Fig. 8). Infolgedessen wird der obere erste Tragarm 140, 141 des zweiten Tragwerks in Richtung des Pfeiles 145 aufgrund der Drehbarkeit des Gelenkelementes 29 um die Gelenkelementachse 290, vgl. Drehpfeil 293, verschoben. Diese Drehbewegung des Gelenkelements 29 um die Drehachse 290 wird über das Verbindungselement 31 auf das Gelenkelement 28 übertragen, an dem das erste Tragwerk 13 befestigt ist. Somit führt das erste Gelenkelement 28 ebenfalls eine Drehung um seine Gelenkelementachse 280 entsprechend dem Drehpfeil 283 aus, wodurch der Hubaktuator 16 dazu veranlaßt wird, sich in seiner axialen Ausdehnung, d.h. in axialer Richtung infolgedessen zwischen den Drehpunkten D und E₁, zu verkürzen, bis die Ladebordwand 15 mit ihrem freien Kantenbereich auf dem Untergrund 30 aufliegt, vgl. die Stellungen der Ladeplattform 15 gem. den Fig. 3 und 6. Die Drehbewegung der Gelenkelemente 28, 29, die in den Fig. 3 und 6 gut sichtbar ist, ist dann beendet, wenn die Ladeplattform 15 bzw. der freie Kantenbereich 150 der Ladeplattform 15 auf dem Untergrund 30 aufliegt.

Beim Anheben der Ladeplattform 15 in Heberichtung 32 vom abgekippten Zustand gem. den Darstellungen in den Fig. 3 und 6 in den Zustand gem. den Fig. 2 und 4 erfolgt die Rückkippung der Ladeplattform 15 in die horizontale Stellung in umgekehrter Weise und wird durch Betätigung des Hubaktuators 16 eingeleitet. Dabei klappen dann auch die Gelenkelemente 28, 29 wieder in ihre Ausgangsstellung entgegen der Richtung der Drehpfeile 283, 293 zurück, so daß der in seiner Funktion an sich bekannte Hebevorgang in Heberichtung 32 bzw. in Senkrichtung 33 vonstattengehen kann.

Die Ladebordwand 15 ist bei dem Ladebordwandsystem 10 gem. Fig. 7 sowie den Fig. 1 bis 6 als sogen. Faltladebordwand ausgebildet, d.h. sie ist um eine Drehachse 151 klappbar und in ihrer Gesamtheit um die Drehachse 143, d.h. die oberen ersten Tragarme 140, 141 des zweiten Tragwerks 14 entsprechend dem Drehpfeil 146 drehbar. In diesem geklappten und um die Achse 143 gedrehten Zustand kann die Ladebordwand 15 unter dem hinteren Ende, d.h. im wesentlichen unterhalb der Ladefläche, des Fahrzeugs positioniert werden.

### Bezugszeichenliste

- 10: Ladebordwandsystem
- 11: Fahrzeug
- 12 13: erstes Tragwerk
- 130: erster Tragarm
- 131: erster Tragarm
- 132: erste Drehachse
- 133: zweite Drehachse
- 134: zweiter Tragarm
- 135: erstes Ende
- 136: zweites Ende
- 137: Drehachse
- 138: Mittelebene
- 14: zweites Tragwerk
- 140: erstes Tragwerk
- 141: erstes Tragwerk
- 142: erste Drehachse
- 143: zweite Drehachse
- 144: dritter Tragarm
- 145: Pfeil
- 146: Drehpfeil
- 15: Ladebordwand
- 150: freier Kantenbereich
- 151: Drehachse
- 16: Hubaktuator
- 160: erstes Ende
- 161: zweites Ende
- 162: Drehachse
- 17: Klappaktuator
- 170: erstes Ende
- 171: zweites Ende
- 172: Drehachse
- 173: Längsachse
- 174: Drehachse
- 18: Ebene (erstes Tragwerk)
- 19: Ebene (zweites Tragwerk)
- 20 21 22 23 24: Verbindungselement
- 25: Verbindungselement
- 26 27 28: Gelenkelement
- 280: Gelenkelementachse
- 281: Gelenkelementplatte
- 282: Gelenkelementplatte
- 283: Drehpfeil
- 29: Gelenkelement
- 290: Gelenkelementachse
- 292: Gelenkelementplatte
- 293: Drehpfeil
- 30: Untergrund
- 31: Verbindungselement
- 32: Heberichtung
- 33: Senkrichtung
- 34: Halteelement
- 340: Befestigungselement
- 341: Befestigungselement
- 35: Hochklapprichtung
- 36: Runterklapprichtung

## Patentansprüche

1. Ladebordwandsystem (10) zur Befestigung an Fahrzeugen (11), insbesondere Lastkraftfahrzeugen, umfassend zwei im wesentlichen parallelogrammförmige, im wesentlichen parallel voneinander beabstandete Tragwerke (13, 14) und eine im wesentlichen plattenförmige Ladebordwand (15) zum Heben (32) und zum Senken (33) der Ladebordwand (15), wobei die beiden Tragwerke (13, 14) teilweise am Fahrzeug über jeweilige im wesentlichen parallel voneinander beabstandete Gelenkelemente (28, 29) befestigt sind, die um eine im wesentlichen horizontale, parallel zur Fläche der Ladebordwand (15) verlaufende Achse (280, 290) derart drehbar sind, daß die Ladebordwand (15) in ihrer auf einem Untergrund (30) abgesenkten Stellung mit ihrem freien Kantenbereich (150) auf den Untergrund (30) abkippend aufliegt, **dadurch gekennzeichnet, daß** die beabstandeten Gelenkelemente (28, 29) über ein Verbindungselement (31) miteinander verbunden sind.

2. Ladebordwandsystem nach Anspruch 1, **dadurch gekennzeichnet, daß** die Gelenkelemente (28, 29) jeweils durch ein Paar im wesentlichen parallel voneinander beabstandete Gelenkelementplatten (281, 282; 291, 292) gebildet werden.

3. Ladebordwandsystem nach Anspruch 2, **dadurch gekennzeichnet, daß** das Verbindungselement (21) an den jeweilig zueinander weisenden Gelenkelementplatten (282, 291) beider Gelenkelemente (28, 29) befestigt ist.

4. Ladebordwandsystem nach einem oder mehreren der Ansprüche 1 bis 3, **dadurch gekennzeichnet, daß** das erste Tragwerk (13) zwei im wesentlichen parallel voneinander beabstandete erste Tragarme (130, 131) umfaßt, wobei die ersten Tragarme (130, 131) über eine erste Drehachse (132) am Gelenkelement (28) befestigt sind und über eine zweite, am gegenüberliegenden Ende der ersten Tragarme (130, 131) angeordnete zweite Drehachse (133) mit einem ersten Ende (160) des Hubaktuators (16) befestigt sind und wobei das zweite Ende (161) des Hubaktuators (16) über eine Drehachse (162) drehbar am Gelenkelement (28) befestigt ist.

5. Ladebordwandsystem nach Anspruch 4, **dadurch gekennzeichnet, daß** das erste Tragwerk (13) einen zweiten Tragarm (134) umfaßt, der an seinem ersten Ende (135) mit den beiden ersten Tragarmen (130, 131) verbunden ist, wobei das zweite Ende (136) eine im wesentlichen orthogonal zu den beiden ersten Tragarmen (130, 131) verlaufende Drehachse (137) aufweist, über die der zweite Tragarm (134) drehbar mit der Ladebordwand (15) befestigt ist.

6. Ladebordwandsystem nach Anspruch 5, **dadurch gekennzeichnet, daß** der zweite Tragarm (134) im wesentlichen in der Mittelebene (138) zwischen den beiden ersten Tragarmen (130, 131) ausgebildet ist.

7. Ladebordwandsystem nach einem oder mehreren der Ansprüche 1 bis 4, **dadurch gekennzeichnet, daß** das zweite Tragwerk (14) zwei im wesentlichen parallel voneinander beabstandete, bezogen auf die in Heberichtung (32) der Ladebordwand (15) obere erste Tragarme (140, 141) umfaßt, wobei die ersten Tragarme (140, 141) über eine erste Drehachse (142) am Gelenkelement (29) drehbar befestigt sind und über eine zweite am anderen Ende des ersten Tragarmes (140, 141) angeordnete zweite Drehachse (143), die im wesentlichen orthogonal zu den ersten Tragarmen (140, 141) und parallel zur ersten Drehachse (142) verläuft, drehbar mit der Ladebordwand (15) befestigt sind.

8. Ladebordwandsystem nach einem oder mehreren der Ansprüche 1 bis 7, **dadurch gekennzeichnet, daß** das zweite Tragwerk (14) einen zweiten, bezogen auf die Heberichtung (32) der Ladebordwand (15) unteren dritten Tragarm (144) umfaßt, der mit seinem ersten Ende (170) drehbar am Fahrzeug (11) befestigt ist und mit seinem zweiten Ende (171) um eine Drehachse (172) im wesentlichen orthogonal zur Längsachse (173) des unteren dritten Tragarms (144) drehbar mit der Ladebordwand (15) befestigt ist, wobei die Längsachse (174) im wesentlichen in der die Schwenkebene bildenden Ebene (19) des zweiten Tragwerks (14) verläuft.

9. Ladebordwandsystem nach Anspruch 8, **dadurch gekennzeichnet, daß** der untere dritte Tragarm (144) des zweiten Tragwerks (14) durch einen Klappaktuator (17) gebildet wird.

10. Ladebordwandsystem nach Anspruch 8, **dadurch gekennzeichnet, daß** der Klappaktuator (17) durch eine Kolben-Zyltindereinrichtung gebildet wird.

11. Ladebordwandsystem nach Anspruch 8, **dadurch gekennzeichnet, daß** der Klappaktuator (17) durch eine elektromotorisch betriebene Einrichtung gebildet wird.

12. Ladebordwandsystem nach einem oder mehreren der Ansprüche 1 bis 11, **dadurch gekennzeichnet, daß** der Hubaktuator (16) durch eine Kolben-Zylindereinrichtung gebildet wird.

13. Ladebordwandsystem nach einem oder mehreren der Ansprüche 1 bis 11, **dadurch gekennzeichnet, daß** der Hubaktuator (16) durch eine elektromotorisch betriebene Einrichtung gebildet wird.

14. Ladebordwandsystem nach einem oder mehreren der Ansprüche 4 bis 13, **dadurch gekennzeichnet, daß** die Tragarme (130, 131; 140, 141) im wesentlichen plattenförmig ausgebildet sind.

15. Ladebordwandsystem nach einem oder mehreren der Ansprüche 5 bis 14, **dadurch gekennzeichnet, daß** der zweite Tragarm (134) des ersten Tragwerks (13) im wesentlichen plattenförmig ausgebildet ist.

16. Ladebordwandsystem nach einem oder mehreren der Ansprüche 1 bis 15, **dadurch gekennzeichnet, daß** die Befestigung des das erste Tragwerk (13) aufnehmenden Gelenkelements (28) am Fahrzeug (11) über ein gesondertes Verbindungselement (24) erfolgt.

17. Ladebordwandsystem nach einem oder mehreren der Ansprüche 7 bis 16, **dadurch gekennzeichnet, daß** die Befestigung des den oberen ersten Tragarm (140, 141) des zweiten Tragwerks (14) aufnehmenden Gelenkelements (29) am Fahrzeug (11) über ein gesondertes Verbindungselement (25) erfolgt.

18. Ladebordwandsystem nach einem oder mehreren der Ansprüche 8 bis 17, **dadurch gekennzeichnet, daß** die Befestigung des unteren dritten Tragarms (144) des zweiten Tragwerks (14) am Fahrzeug (11) über ein gesondertes Verbindungselement (25) erfolgt.

19. Ladebordwandsystem nach Anspruch 18, **dadurch gekennzeichnet, daß** das Verbindungselement (24, 25) eine plattenförmige Struktur aufweist.

20. Ladebordwandsystem nach einem oder mehreren der Ansprüche 1 bis 19, **dadurch gekennzeichnet, daß** das erste Tragwerk k (13) und das zweite Tragwerk (14) über ein im wesentlichen quer zu den Tragwerken (13, 14) verlaufendes Halteelement (34) verbunden sind.

21. Ladebordwandsystem nach Anspruch 20, **dadurch gekennzeichnet, daß** das Halteelement (34) rohrförmig ausgebildet ist.

22. Ladebordwandsystem nach einem oder mehreren der Ansprüche 1 bis 21, **dadurch gekennzeichnet, daß** die Ladebordwand (15) als Klappladebordwand ausgebildet ist.

23. Ladebordwandsystem nach einem oder mehreren der Ansprüche 1 bis 22, **dadurch gekennzeichnet, daß** die Kräfteeinleitungspunkte des Hubaktuators (16) in das als Hubtragwerk ausgebildete erste Tragwerk (13) in der durch die Drehpunkte A₁, C₁, D, E₁ der Elemente des ersten Tragwerks (13) gebildeten Ebene (18) liegen, in der der Hubaktuator (16) des ersten Tragwerks (13) in bezug auf die von ihm auf das erste Tragwerk (13) ausgebildeten Kräfte einwirken.

24. Ladebordwandsystem nach einem oder mehreren der Ansprüche 1 bis 23, **dadurch gekennzeichnet, daß** die Drehpunkte A₂, B, C₂, E₂ der Elemente des zweiten Tragwerks (14) in einer Ebene (19) liegen.

25. Ladebordwandsystem nach Anspruch 24, **dadurch gekennzeichnet, daß** die Kräfteeinleitungspunkte des Klappaktuators (17), wenn dieser Teil des zweiten Tragwerks (14) ist, in der durch die Drehpunkte A₂, B, C₂, E₂ gebildeten Ebene (19) liegen, in der der Klappaktuator (17) in bezug auf die von ihm in dem Tragwerk (14) ausgeübten Kräfte einwirken.
